# EUROPÄISCHE PATENTSCHRIFT

(11) **EP 1 802 499 B1**
(45) Veröffentlichungstag und Bekanntmachung des Hinweises auf die Patenterteilung: **29.04.2009**
(21) Anmeldenummer: 05776114.0
(22) Anmeldetag: 16.08.2005
(51) Int. Cl.: B60T 7/12, B60T 8/32

(54) **VERFAHREN UND VORRICHTUNG ZUR FREIGABE EINER BREMSASSISTENTENFUNKTION IN EINEM KRAFTFAHRZEUG**
METHOD AND DEVICE FOR ENABLING A BRAKING ASSISTANCE FUNCTION IN A MOTOR VEHICLE
PROCEDE ET DISPOSITIF POUR DEBLOQUER LA FONCTION D'ASSISTANCE DE FREINAGE DANS UNE AUTOMOBILE

(30) Priorität: 14.10.2004 DE 102004050059
(43) Veröffentlichungstag der Anmeldung: 04.07.2007
(73) Patentinhaber: ROBERT BOSCH GMBH, 70442 Stuttgart (DE)
(72) Erfinder: WAGNER, Jochen, 71696 Moeglingen (DE); EPPLE, Stefan, 71696 Moeglingen (DE)
(86) Internationale Anmeldenummer: PCT/EP2005/054012
(87) Internationale Veröffentlichungsnummer: WO 2006/040209

(56) Entgegenhaltungen:
- DE-A1- 19 739 152
- DE-A1- 19 841 879
- US-A- 6 145 939
- US-A1- 2002 130 550
- US-B1- 6 637 839

## Beschreibung

### Stand der Technik

Die Erfindung betrifft ein Verfahren und eine Vorrichtung zur Versetzung der Bremsassistentenfunktion in einen aktivierbaren Zustand.

Aus der DE 197 39 152 A1 sind ein Verfahren und eine Vorrichtung zur Steuerung der Bremsanlage eines Fahrzeugs bekannt. Dabei wird ein Betätigungssignal erfasst und ein automatischer Bremsvorgang ausgelöst, wenn dieses Betätigungssignal einen vorgegebenen Schwellenwert überschreitet. Dieser Schwellenwert ist abhängig von der aktuell vorliegenden Bremsphase.

### Vorteile der Erfindung

Die Erfindung betrifft ein Verfahren zur Versetzung der Bremsassistentenfunktion in einen aktivierbaren Zustand, bei dem
- nach Beendigung einer Bremskraftkontrollfunktion die Bremsassistentenfunktion in einen nicht aktivierbaren Zustand versetzt wird oder ein nichtaktivierbarer Zustand beibehalten wird,
- Informationen über den hydraulischen Druck an einer vorgegebenen Stelle des hydraulischen Bremskreises ermittelt werden und
- nach Erfülltsein wenigstens einer vorgegebenen Bedingung durch diese Informationen die Bremsassistentenfunktion in einen aktivierbaren Zustand versetzt wird.

Anhand der Informationen über den hydraulischen Druck kann ein Abklingen von hydraulischen Schwingungen im Bremskreis nach Abschalten einer Bremskraftkontrollfunktion erkannt werden.

Eine vorteilhafte Ausgestaltung der Erfindung ist dadurch gekennzeichnet, dass
- nach Beendigung einer Bremskraftkontrollfunktion die Bremsassistentenfunktion in einen nicht aktivierbaren Zustand versetzt wird oder ein nichtaktivierbarer Zustand beibehalten wird und
- anschließend zu verschiedenen Ermittlungszeitpunkten Informationen über den hydraulischen Druck an einer vorgegebenen Stelle des hydraulischen Bremskreises ermittelt werden.

Diese vorteilhafte Ausgestaltung lässt sich auch so ausdrücken, dass anschließend an die Beendigung der Bremskraftkontrollfunktion und das Versetzen der Bremsassistentenfunktion in einen nicht aktivierbaren Zustand oder des Beibehaltens eines nichtaktivierbaren Zustandes der Bremsassistentenfunktion zu verschiedenen Ermittlungszeitpunkten Informationen über den hydraulischen Druck an einer vorgegebenen Stelle des hydraulischen Bremskreises ermittelt werden.

Eine vorteilhafte Ausgestaltung der Erfindung ist dadurch gekennzeichnet, dass es sich bei der Bremskraftkontrollfunktion um einer Bremsassistentenfunktion handelt. Damit wird sichergestellt, dass bei der Abschaltung eines aktiven Bremsassistenteneingriffs die dann häufig auftretenden Druckoszillationen im Bremskreis zu keiner erneuten Aktivierung des Bremsassistenten führen.

Eine vorteilhafte Ausgestaltung der Erfindung ist dadurch gekennzeichnet, dass es sich bei dem hydraulischen Druck an einer vorgegebenen Stelle des Bremskreises um den Vordruck am Ausgang des Hauptbremszylinders handelt. Der Vordruck wird in Bremsregelungssystemen üblicherweise durch einen Sensor umfasst. Durch die

Mitverwendung dieses Sensors kann der Einsatz der vorliegenden Erfindung ohne zusätzlichen Sensor und damit sehr kostengünstig erfolgen.

Eine vorteilhafte Ausgestaltung der Erfindung ist dadurch gekennzeichnet, dass die Informationen zu regelmäßigen Ermittlungszeitpunkten ermittelt werden.

Eine vorteilhafte Ausgestaltung der Erfindung ist dadurch gekennzeichnet, dass es sich bei den Informationen um die Änderung des Druckwertes in einem Zeitintervall vorgegebener Länge handelt.

Eine vorteilhafte Ausgestaltung der Erfindung ist dadurch gekennzeichnet, dass als vorgegebene Bedingung die Änderung des Druckes pro Zeitintervall während einer vorgegebenen Anzahl von aufeinanderfolgenden Ermittlungszeitpunkten stets einen vorgegebenen Grenzwert unterschreitet.

Damit kann ein Abklingen der Schwingung festgestellt werden. Bei dem vorgegebenen Grenzwert kann es sich in drei verschiedenen Ausgestaltungen um einen negativen Wert oder um den Wert Null oder um einen geringen positiven Wert handeln.

Eine vorteilhafte Ausgestaltung der Erfindung ist dadurch gekennzeichnet, dass als vorgegebene Bedingung die Änderung des Druckes pro Zeitintervall bei einer vorgegebenen Anzahl von Ermittlungszeitpunkten einen vorgegebenen Grenzwert unterschreitet.
Bei dieser Ausgestaltung wird die Tatsache ausgenutzt, dass die nach Abschalten des Bremsassistenten entstehenden Druckoszillationen sehr kurzlebig sind und nur wenige Perioden lang andauern. Bei dem vorgegebenen Grenzwert kann es sich auch hier in drei verschiedenen Ausgestaltungen um einen negativen Wert oder um den Wert Null oder um einen geringen positiven Wert handeln. Die Wahl eines geringen positiven Grenzwertes im Bereich von ca. 0.3 bar bis 0.5 bar berücksichtigt die Tatsache, dass der Druck nicht exakt ermittelbar ist, deshalb ist ein zulässiger geringer positiver Wert im Sinne eines Toleranzbandes zu betrachten.

Eine vorteilhafte Ausgestaltung der Erfindung dadurch gekennzeichnet, dass die Bremskraftkontrollfunktion beendet ist, wenn Quotient des Druck in einem Radbremszylinder dividiert durch den Vordruck einen vorgegebenen Grenzwert unterschreitet, wobei der Grenzwert größer oder gleich 1 ist. Dabei wird insbesondere der den größten Druck aufweisende Radbremszylinder betrachtet. Der Druck in den Radbremszylindern kann durch Sensoren oder durch eine Schätzung bzw. Berechnung anhand eines mathematischen Modells ermittelt werden. Selbstverständlich ist es denkbar und möglich, dass neben dem genannten Kriterium zur Beendigung der Bremskraftkontrollfunktion noch weitere zusätzliche Kriterien existieren.

Weiter umfasst die Erfindung eine Vorrichtung zur Versetzung der Bremsassistentenfunktion in einen aktivierbaren Zustand, welche
- Bremsassistentsperrmittel, durch welche die Bremsassistentenfunktion nach Beendigung einer Bremskraftkontrollfunktion in einen nicht aktivierbaren Zustand versetzt wird oder ein nichtaktivierbarer Zustand beibehalten wird,
- Ermittlungsmittel, durch welche anschließend zu verschiedenen Ermittlungszeitpunkten Informationen über den hydraulischen Druck an einer vorgegebenen Stelle des hydraulischen Bremskreises ermittelt werden und
- Bremsassistentbereitstellungsmittel, durch welche nach Erfülltsein wenigstens einer vorgegebenen Bedingung durch die in den Ermittlungsmitteln ermittelten Informationen die Bremsassistentenfunktion in einen aktivierbaren Zustand versetzt wird
enthält.

Die vorteilhaften Ausgestaltungen des erfindungsgemäßen Verfahrens äußern sich selbstverständlich auch als vorteilhafte Ausgestaltungen der erfindungsgemäßen Vorrichtung und umgekehrt.

### Zeichnung

Die Zeichnung besteht aus den Figuren 1 bis 3.
Figur 1 zeigt die zeitlichen Verläufe verschiedener Größen.
Figur 2 zeigt den prinzipiellen Ablauf des erfindungsgemäßen Verfahrens.
Figur 3 zeigt den prinzipiellen Aufbau der erfindungsgemäßen Vorrichtung.

### Ausführungsbeispiele

Nach Beendigung eines aktiven bzw. teilaktiven Bremseneingriffs und dem darauffolgenden Bremsdruckabbau in den Radbremszylindern können während und unmittelbar nach der Druckabbauphase im Bremskreis Druckschwingungen, auftreten. Diese Druckschwingungen werden vom Vordrucksensor am Ausgang des Hauptzylinders erfasst und können, sofern sie eine hinreichend große Intensität aufweisen, fälschlicherweise als eine vom Fahrer initiierte Auslösung des Bremsassistenten gedeutet werden. Damit würde eine unbeabsichtigte und nicht gerechtfertigte Auslösung des Bremsassistenten erfolgen.

Ein aktiver bzw. teilaktiver Bremseingriff wird Beispiel von folgenden Fahrzeugfunktionen durchgeführt:
- der Fahrdynamikregelung (aktiver und teilaktiver Bremseingriff möglich)
- der Antriebsschlupfregelung (aktiver und teilaktiver Bremseingriff möglich)
- der Hillholderfunktion (aktiver und teilaktiver Bremseingriff möglich)
- der HDC-Funktion (HDC = "Hill Descent Control"), welche beim Bergabwärtsfahren des Fahrzeugs eine konstante Fahrtgeschwindigkeit einregelt (nur aktiver Bremseingriff)
- die Bremsenfading-Kompensationsfunktion HFC (HFC = "Hydraulic Fading Compensation"), welche bei heißen Bremsscheiben zur Kompensation des Fading-Effektes (d.h. dem Nachlassen der Bremswirkung) den Bremsdruck fahrerunabhängig erhöht (nur teilaktiver Bremseingriff)
- der Bremsassistentenfunktion (nur teilaktiver Bremseingriff)
- der HW-Funktion (HVV= hydraulische Vollverzögerung, nur teilaktiver Bremseingriff)

Die HVV-Funktion wirkt nur auf die Räder der Hinterachse und wird aktiviert, wenn sich die Räder der Vorderachse in einer ABS-Regelung befinden, die Räder der Hinterachse jedoch nicht.

Während der Durchführung dieser Eingriffe ist Aktivierung der Bremsassistentenfunktion gesperrt oder die Bremsassistentenfunktion ist in ihrer Empfindlichkeit verringert. Die Bremsassistentenfunktion wird erfindungsgemäß erst dann wieder freigegeben bzw. auf die höhere Empfindlichkeit zurückgeschaltet, wenn
- der aktive bzw. teilaktive Bremseingriff beendet ist und
- der daraufhin folgende zeitliche Verlauf des Vordrucks vorgebbare Bedingungen erfüllt.

Dadurch wird sichergestellt, dass die durch den Ausschaltvorgang des aktiven Bremseingriffs möglicherweise generierte Vordruckmodulation, d.h. die am Vordrucksensor sichtbaren Druckschwingungen, nicht zu einer Fehlaktivierung des Bremsassistenten führen.

In einer Ausführungsform erfolgt die Freigabe des Bremsassistenten erst dann, wenn der Änderung des Vordrucks für eine vorgegebene Anzahl von insbesondere aufeinanderfolgenden Zyklen nach Abschalten des vorhergegangenen aktiven Bremseneingriffs kleiner oder gleich einem Schwellenwert ist. Dabei werden der Vordruck und auch dessen zeitliche Änderung in jedem Zyklus einmal ermittelt. Ein Zyklus umfasst dabei eine Zeitdauer von beispielsweise 20 Millisekunden, d.h. alle 20 ms werden der Vordruck und dessen zeitliche Änderung ermittelt. Als geeignete Schwellenwert hat sich beispielsweise eine zeitliche Änderung von 0.5bar/20 ms als geeignet erwiesen. Die vorgegebene Anzahl von Zyklen kann beispielsweise 10 sein. Bei diesem Zahlenbeispiel wird also alle 20 ms die Änderung des Vordrucks ermittelt. Liegt zehnmal hintereinander eine Zunahme von maximal 0.5 bar oder sogar eine Abnahme des Vordrucks vor, dann wird der Bremsassistent wieder freigegeben und kann vom Fahrer über das Bremspedal wieder aktiviert werden.

In einer Ausgestaltung der Erfindung kann auch auf die Forderung, dass die Zyklen mit zugehörigem negativem Vorzeichen der Vordruckänderung unmittelbar aufeinanderfolgen müssen, verzichtet werden.

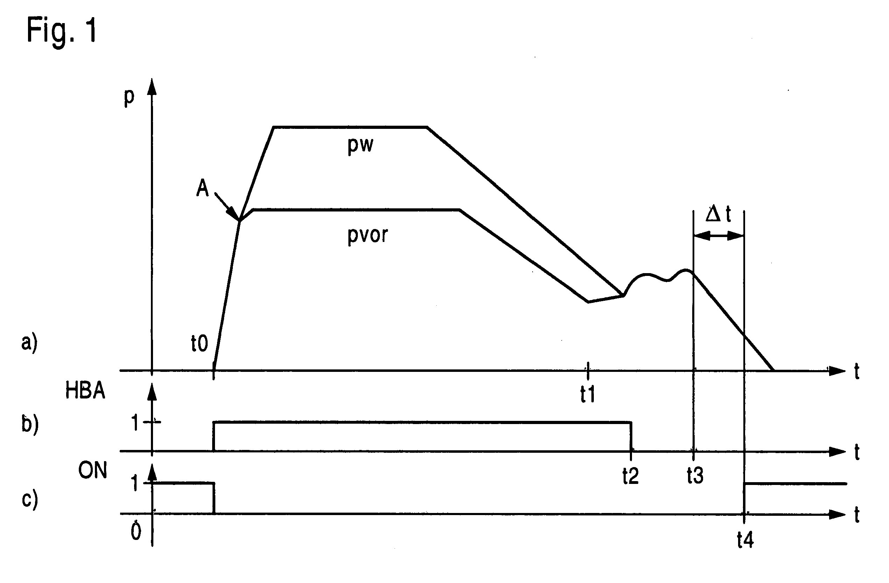

In Fig. 1 sind die zeitlichen Verläufe verschiedener Größen aufgetragen. Dabei ist jeweils in Abszissenrichtung die Zeit t aufgetragen. In Ordinatenrichtung ist
- im oberen Diagramm a) der Druck p aufgetragen,
- im mittleren Diagramm b) der Status HBA des hydraulischen Bremsassistenten aufgetragen (HBA = 0: Bremsassistent nicht aktiviert, HBA = 1: Bremsassistent aktiviert) und
- im unteren Diagramm c) der Status ON der Freigabe des hydraulischen Bremsassistenten (ON = 0: Bremsassistent nicht aktivierbar bzw. freigegeben, ON = 1: Bremsassistent aktivierbar bzw. freigegeben) aufgetragen.

Dabei sind im oberen Diagramm der Druck pw in einem Radbremszylinder sowie der Druck pvor aufgetragen. Ab dem Zeitpunkt t2 fallen pw und pvor zusammen, d.h. pw = pvor. Deshalb ist für t > t2 nur eine einzelne Kurve in diesem Diagramm zu sehen.

Bis zur Zeit t0 liegt ein ungebremster Fahrzustand vor und der Bremsassistent ist aktivierungsbereit, d.h. der Bremsassistent ist freigegeben und kann jederzeit aktiviert werden. Dies ist dadurch erkennbar, dass im Diagramm c) der Status ON den Wert 1 annimmt, der Bremsassistent gemäß Diagramm b) jedoch nicht aktiviert ist. Zugleich liegt gemäß Diagramm a) weder ein Vordruck noch ein Bremsdruck im Radbremszylinder vor.

Zum Zeitpunkt t0 wird durch den Fahrer ein Bremsvorgang eingeleitet. Dies ist im Diagramm a) am Anstieg des Vordrucks pvor und des Radbremszylinderdrucks pw erkennbar. Der Druckaufbau erfolgt derart schnell (d.h. der Fahrer betätigt die Bremse derart stark bzw. rasch), dass der Bremsassistent aktiviert wird. Zu dem vom Fahrer erzeugten Bremsdruck (messbar durch pvor) wird ein fahrerunabhängig erzeugter Bremsdruck überlagert, so dass ab dem mit A gekennzeichneten Zeitpunkt der Radbremszylinderdruck pw größer als der Vordruck pvor ist. Deshalb wechselt zum Zeitpunkt t0 der Status HBA auf den Wert 1 und der Status ON auf den Wert 0.

Der Fahrer hält den Vordruck pvor eine Zeitlang aufrecht, nimmt dann den Vordruck zurück , bis er ihn zum Zeitpunkt t1 langsam wieder anhebt. Inzwischen hat auch der Radbremszylinderdruck wieder abgenommen und zum Zeitpunkt t2 den Wert des Vordrucks erreicht bzw. der Quotient des Druck in einem Radbremszylinder dividiert durch den Vordruck hat vorgegebenen Grenzwert unterschritten, wobei der Grenzwert größer oder gleich 1 ist. Deshalb wird zum Zeitpunkt t2 der Bremsassistent abgeschaltet.

Durch die Deaktivierung des Bremsassistenten und das damit verbundene Umschalten von Ventilen im Bremskreis (insbesondere das Umschaltventil) treten ab dem Zeitpunkt t2 Oszillationen im Bremsdruckverlauf auf, welche bei genügender Steilheit zu einer erneuten Auslösung des Bremsassistenten führen. Ab dem Zeitpunkt t2 wird regelmäßig die Änderung des Vordrucks pro Zeitintervall ermittelt, z.B. kann diese Ermittlung alle 20 Millisekunden stattfinden. Wird über eine bestimmte Anzahl von Zyklen (z.B. 10 Zyklen) hinweg stets ein genügend starkes Abklingen des Vordrucks festgestellt, dann sind die Oszillationen sicher abgeklungen und der Bremsassistent kann wieder freigegeben werden, d.h. in einen aktivierbaren Zustand versetzt werden. In dem mit Δt gekennzeichneten Zeitintervall zwischen t3 und t4 ist diese Bedingung erfüllt, d.h. während dieses Intervalls wird bei jeder "Stichprobe" (dh. in jedem Ermittlungszyklus) eine genügend starke Abnahme des Bremsdrucks festgestellt. Im Zahlenbeispiel umfasst Δt 10 Zyklen bzw. Ermittlungszyklen). Deshalb wird zum Zeitpunkt t4 der Bremsassistent wieder in einen aktivierungsbereiten Zustand gesetzt, d.h.ON wechselt auf den Wert 1.

Es sei darauf hingewiesen, dass der Druckabfall vor dem Zeitpunkt t1 auch wesentlich steiler als in Fig. 1 eingezeichnet erfolgen kann. Dies kann zu noch stärkeren Oszillationen als in Fig. 1 eingezeichnet führen.

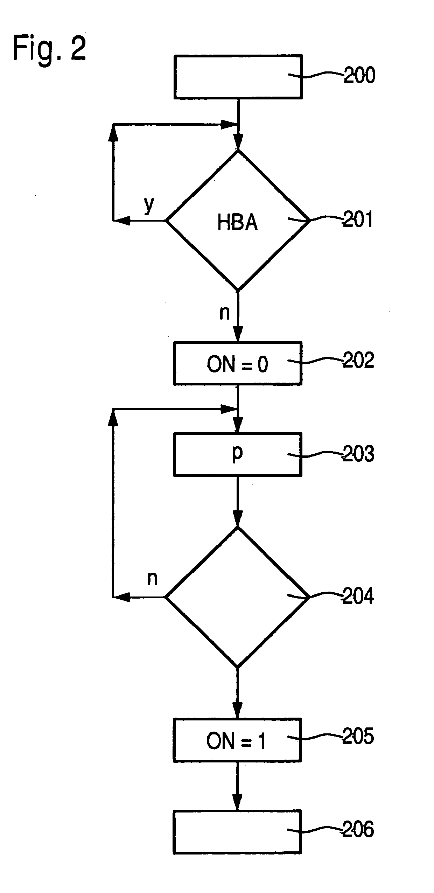

Der Ablauf des erfindungsgemäßen Verfahren ist in Fig. 2 dargestellt. Nach dem Start in Block 200 wird in Block 201 abgefragt, ob die mit HBA bezeichnete Bremsassistentenfunktion (es kann sich auch allgemein um eine Bremskraftkontrollfunktion handeln) noch andauert. Lautet die Antwort "Ja" (In Fig. 2 mit "y" gekennzeichnet), dann wird zum Eingang von Block 201 zurückverzeigt. Lautet die Antwort dagegen "Nein" (in Fig. 2 mit "n" gekennzeichnet"), dann wird anschließend in Block 202 der Status ON der Freigabe des hydraulischen Bremsassistenten (ON = 0: Bremsassistent nicht aktivierbar bzw. freigegeben, ON =1: Bremsassistent aktivierbar bzw. freigegeben) auf Null gesetzt. Falls bereits der Status ON = 0 vorlag, dann wird dieser Status beibehalten. Anschließend werden in Block 203 Informationen über den hydraulischen Druck p an einer vorgegebenen Stelle des Bremskreises ermittelt. In Block 204 wird daraufhin abgefragt, ob eine vorgegebene Bedingung durch diese Informationen erfüllt ist. Lautet die Antwort "Ja", dann wird in Block 205 der Freigabestatus des Bremsassistenten auf ON = 1 gesetzt. Lautet die Antwort, "Nein", dann wird zu Block 203 zurückverzweigt und es werden dort zum nächsten Ermittlungszeitpunkt Informationen über den hydraulischen Druck p an einer vorgegebenen Stelle des Bremskreises ermittelt. Anschließend an Block 205 endet in Block 206 das Verfahren.

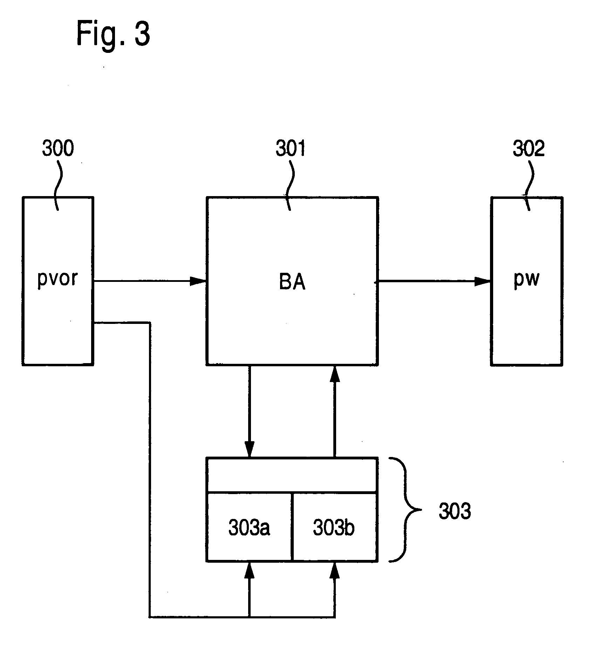

Der Aufbau einer Ausführungsform der erfindungsgemäßen Vorrichtung ist Fig. 3 dargestellt. Dabei enthält Block 300 Ermittlungsmittel (z.B. einen Vordrucksensor), deren Ausgangssignale an den Bremsassistenten 301 geliefert werden. Der Bremsassistent 301 steuert wiederum die Radbremsen 302 an. Block 301 steht in Wechselwirkung mit Block 303, welcher den Status der Aktivierungsbereitschaft des Bremsassistenten steuert. Block 303 enthält dabei
- Bremsassistentsperrmittel 303a, durch welche die Bremsassistentenfunktion 301 nach Beendigung einer Bremskraftkontrollfunktion in einen nicht aktivierbaren Zustand versetzt wird oder ein nichtaktivierbarer Zustand beibehalten wird sowie
- Bremsassistentbereitstellungsmittel 303b, durch welche nach Erfülltsein wenigstens einer vorgegebenen Bedingung durch die in den Ermittlungsmitteln 300 ( es kann sich dabei um den Vordrucksensor handeln) ermittelten Informationen die Bremsassistentenfunktion in einen aktivierbaren Zustand versetzt wird.

Die Blöcke 303a und 303b erhalten Eingangssignale von Block 300.

## Patentansprüche

1. Verfahren zur Versetzung der Bremsassistentenfunktion in einen aktivierbaren Zustand, bei dem
- nach Beendigung einer Bremskraftkontrollfunktion die Bremsassistentenfunktion in einen nicht aktivierbaren Zustand versetzt wird oder ein nichtaktivierbarer Zustand beibehalten wird (202),
- Informationen über den hydraulischen Druck an einer vorgegebenen Stelle des hydraulischen Bremskreises ermittelt werden (203) und
- nach Erfülltsein wenigstens einer vorgegebenen Bedingung durch diese Informationen (204) die Bremsassistentenfunktion in einen aktivierbaren Zustand versetzt wird (205).

2. Verfahren nach Anspruch 1, **dadurch gekennzeichnet, dass**
- anschließend an die Beendigung der Bremskraftkontrollfunktion und das Versetzen der Bremsassistentenfunktion in einen nicht aktivierbaren Zustand oder des Beibehaltens eines nichtaktivierbaren Zustandes (202) der Bremsassistentenfunktion zu verschiedenen Ermittlungszeitpunkten Informationen über den hydraulischen Druck an einer vorgegebenen Stelle des hydraulischen Bremskreises ermittelt werden (203).

3. Verfahren nach Anspruch 1, **dadurch gekennzeichnet, dass** es sich bei der Bremskraftkontrollfunktion um einer Bremsassistentenfunktion handelt.

4. Verfahren nach Anspruch 1, **dadurch gekennzeichnet, dass** es sich bei dem Druck an einer vorgegebenen Stelle des Bremskreises um den Vordruck (pvor) am Ausgang des Hauptbremszylinders handelt.

5. Verfahren nach Anspruch 1, **dadurch gekennzeichnet, dass** die Informationen (203) zu regelmäßigen Ermittlungszeitpunkten ermittelt werden.

6. Verfahren nach Anspruch 1, **dadurch gekennzeichnet, dass** es sich bei den Informationen um die Änderung des Druckwertes in einem Zeitintervall vorgegebener Länge handelt.

7. Verfahren nach Anspruch 6, **dadurch gekennzeichnet, dass** als vorgegebene Bedingung die Änderung des Druckes pro Zeitintervall während einer vorgegebenen Anzahl von aufeinanderfolgenden Ermittlungszeitpunkten stets einen vorgegebenen Grenzwert unterschreitet.

8. Verfahren nach Anspruch 6, **dadurch gekennzeichnet, dass** als vorgegebene Bedingung die Änderung des Druckes pro Zeitintervall bei einer vorgegebenen Anzahl von Ermittlungszeitpunkten einen vorgegebenen Grenzwert unterschreitet.

9. Verfahren nach Anspruch 4, **dadurch gekennzeichnet, dass** die Bremskraftkontrollfunktion beendet ist, wenn Quotient des Drucks in einem Radbremszylinder (pw) dividiert durch den Vordruck (pvor) einen vorgegebenen Grenzwert unterschreitet, wobei der Grenzwert größer oder gleich 1 ist.

10. Verfahren nach Anspruch 9, **dadurch gekennzeichnet, dass** es sich bei dem Radbremszylinder um denjenigen Radbremszylinder handelt, welcher den größten geschätzten aufweist.

11. Vorrichtung zur Versetzung der Bremsassistentenfunktion (301) in einen aktivierbaren Zustand, enthaltend
- Bremsassistentsperrmittel (303a), durch welche die Bremsassistentenfunktion nach Beendigung einer Bremskraftkontrollfunktion in einen nicht aktivierbaren Zustand versetzt wird oder ein nichtaktivierbarer Zustand beibehalten wird,
- Ermittlungsmittel (300), durch welche anschließend zu verschiedenen Ermittlungszeitpunkten Informationen über den hydraulischen Druck an einer vorgegebenen Stelle des hydraulischen Bremskreises ermittelt werden und
- Bremsassistentbereitstellungsmittel (303b), durch welche nach Erfülltsein wenigstens einer vorgegebenen Bedingung durch die in den Ermittlungsmitteln ermittelten Informationen die Bremsassistentenfunktion in einen aktivierbaren Zustand versetzt wird.

## Claims

1. Method for placing the braking assistance function in a state in which it can be activated, in which method
- after a braking force control function has ended, the braking assistance function is placed in a state in which it cannot be activated or a state in which it cannot be activated is maintained (202),
- information about the hydraulic pressure is acquired at a predefined location on the hydraulic brake circuit (203), and
- after at least one predefined condition has been met by this information (204), the braking assistance function is placed in a state in which it can be activated (205).

2. Method according to Claim 1, **characterized in that**
- subsequent to the termination of the braking force control function and the placing of the braking assistance function in a state in which it cannot be activated or subsequent to the maintenance of a state (202) of the braking assistance function which cannot be activated, information about the hydraulic pressure is acquired at a predefined location on the hydraulic brake circuit at various acquisition times (203).

3. Method according to Claim 1, **characterized in that** the braking force control function is a braking assistance function.

4. Method according to Claim 1, **characterized in that** the pressure at a predefined location on the brake circuit is the admission pressure (pvor) at the outlet of the master brake cylinder.

5. Method according to Claim 1, **characterized in that** the information (203) is acquired at regular acquisition times.

6. Method according to Claim 1, **characterized in that** the information concerns the changing of the pressure value in a time interval with a predefined length.

7. Method according to Claim 6, **characterized in that** a predefined condition is that in every time interval the changing of the pressure always drops below a predefined limiting value during a predefined number of successive acquisition times.

8. Method according to Claim 6, **characterized in that** a predefined condition is that in every time interval the changing of the pressure drops below a predefined limiting value at a predefined number of acquisition times.

9. Method according to Claim 4, **characterized in that** the braking force control function is terminated if the quotient of the pressure in a wheel brake cylinder (pw) divided by the admission pressure (pvor) drops below a predefined limiting value, where the limiting value is greater than or equal to one.

10. Method according to Claim 9, **characterized in that** the wheel brake cylinder is that wheel brake cylinder which has the greatest estimated.

11. Device for placing the braking assistance function (301) in a state in which it can be activated, containing
- braking assistance locking means (303a) by means of which the braking assistance function is placed, after termination of a braking force control function, in a state in which it cannot be activated or a state in which it cannot be activated is maintained,
- acquisition means (300) which acquire information about the hydraulic pressure at a predefined location on the hydraulic brake circuit subsequent to various acquisition times, and
- braking assistance preparation means (303b) which, after at least one predefined condition has been met by the information acquired in the acquisition means, places the braking assistance function in a state in which it can be activated.

## Revendications

1. Procédé pour amener la fonction d'assistance de freinage dans un état activable, dans lequel :
- après l'achèvement d'une fonction de contrôle de la force de freinage, la fonction d'assistance de freinage est amenée dans un état non activable, ou est maintenue dans un état non activable (202),
- des informations concernant la pression hydraulique sont détectées (203) à un emplacement prédéterminé du circuit de freinage hydraulique et
- après qu'au moins une condition prédéterminée a été remplie par ces informations (204), la fonction d'assistance de freinage est amenée dans un état activable (205).

2. Procédé selon la revendication 1, **caractérisé en ce que**
- suite à l'achèvement de la fonction de contrôle de la force de freinage et à la commutation de la fonction d'assistance de freinage dans un état non activable ou à la conservation d'un état non activable (202) de la fonction d'assistance de freinage, des informations concernant la pression hydraulique en un point prédéfini du circuit de freinage hydraulique sont déterminée (203) à différents instants de détermination.

3. Procédé selon la revendication 1, **caractérisé en ce que** la fonction de contrôle de la force de freinage est une fonction d'assistance de freinage.

4. Procédé selon la revendication 1, **caractérisé en ce que** la pression en un emplacement prédéfini du circuit de freinage est la pression préalable (pvor) à la sortie du cylindre de frein principal.

5. Procédé selon la revendication 1, **caractérisé en ce que** les informations (203) sont déterminées à des instants de détermination réguliers.

6. Procédé selon la revendication 1, **caractérisé en ce que** les informations sont la variation de la valeur de pression dans un intervalle de temps de longueur prédéterminée.

7. Procédé selon la revendication 6, **caractérisé en ce qu'**en tant que condition prédéterminée, la variation de la pression par intervalle de temps pendant un nombre prédéterminé d'instants de détermination successifs est toujours inférieure à une valeur limite prédéterminée.

8. Procédé selon la revendication 6, **caractérisé en ce qu'**en tant que condition prédéterminée, la variation de la pression par intervalle de temps pour un nombre prédéterminé d'instants de détermination est inférieure à une valeur limite prédéterminée.

9. Procédé selon la revendication 4, **caractérisé en ce que** la fonction de contrôle de la force de freinage est achevée lorsque le quotient de la pression dans un cylindre de frein de roue (pw) divisée par la pression préalable (pvor) est inférieur à une valeur limite prédéterminée, la valeur limite étant supérieure ou égale à 1.

10. Procédé selon la revendication 9, **caractérisé en ce que** le cylindre de frein de roue est le cylindre de frein de roue qui présente la plus grande pression estimée.

11. Dispositif pour amener la fonction d'assistance de freinage (301) dans un état activable, contenant :
- des moyens de blocage de l'assistance de freinage (303a), grâce auxquels la fonction d'assistance de freinage peut être amenée dans un état non activable à la fin d'une fonction de contrôle de la force de freinage, ou grâce auxquels l'état non activable est maintenu,
- des moyens de détermination (300) grâce auxquels, suite à différents instants de détermination, des informations concernant la pression hydraulique à un endroit prédéterminé du circuit de freinage hydraulique sont déterminées et
- des moyens de fourniture d'assistance de freinage (303b), grâce auxquels, après qu'au moins une condition prédéterminée a été remplie par les informations déterminées dans les moyens de détermination, la fonction d'assistance de freinage est amenée dans un état activable.
